# EUROPEAN PATENT SPECIFICATION

(11) **EP 0 614 609 B1**
(45) Date of publication and mention of the grant of the patent: **29.12.1999**
(21) Application number: 94200246.0
(22) Date of filing: 09.02.1994
(51) Int. Cl.: A21D 13/00, A21D 8/04, A21D 2/02

(54) **A method for the production of bread derivatives, particularly bread snacks and the like**
Verfahren zur Herstellung von Brotderivaten, insbesondere Brotsnacks und dergleichen
Procédé de production de dérivés de pain, notamment snacks à base de pain ou similaire

(30) Priority: 10.03.1993 IT MI930462
(43) Date of publication of application: 14.09.1994
(73) Proprietor: BARILLA ALIMENTARE S.P.A., 43100 Parma (IT)
(72) Inventor: Boselli, Tiziano, I-43100 Parma (IT); Righi, Stefano, I-42028 Poviglio - Reggio Emilia (IT)
(74) Representative: Vannini, Torquato

(56) References cited:
- EP-A- 0 435 606
- GB-A- 1 187 292
- GB-A- 1 235 557
- US-A- 1 803 588
- US-A- 3 167 432
- DATABASE WPI Section Ch, Week 8503, Derwent Publications Ltd., London, GB; Class D11, AN 85-016723 & JP-A-59 051 250 (SHIKISHIMA SEIPAN K.) 13 December 1984

## Description

The present invention relates generally to a method for the production of bread derivatives; more particularly the invention concerns bread dough and a method for the industrial production of bread tit bits and like products commonly called snacks.

By the term: bread derivatives, in the description and in the claims which follows, it is intended to identify food products obtained from a bread dough, comprising mainly flour, water, yeast, salt and possibly edible fats, sugars, malt extracts and other conventional additives of this type.

By the term "snacks" it is intended to identify edible products made available in small sizes, which are attractive, appetizing, and ready to be eaten as such or in combination with other "snacks", all with full regard to conventional food standards.

It is well known, on the one hand, that the desire for these particular products (snacks) is ever increasing and, therewith, there is continual research into new forms of snacks with new flavours for ever greater satisfaction of consumer tastes.

On the other hand it is known that, among these tastes in the food field, the taste of bread, the true bread flavour, still has a considerable position.

As a consequence it has been proposed that snacks should be produced with a bread flavour, with the use of bread doughs and reproducing several (very few) bread shapes in miniature, and this has indeed been brought about.

The technique used for this production is based fundamentally on the shaping of small pieces of dough by press moulding, essentially by means of a rotary press process.

This technique does not enable production to be carried out on an industrial scale and, particularly, results in products being obtained with a squashed and pressed appearance, that is not always agreeable and not always acceptable; products with slightly elaborate shapes cannot be obtained.

Other production techniques and other shapes of bread snacks have not had any success, even when made on a small scale, artisan level, particularly because of the toughness and visco-elasticity of the bread doughs.

These characteristics are in fact such that, immediately the dough has been given a particular shape it tends to return, more or less rapidly and to a greater or lesser extent, to its original lack of shape.

The idea which is at the root of the present invention is that of providing true bread snacks in more unexpected shapes which are as different as possible from those in which bread is currently found, for example, and in particular, in the shapes traditionally given to pasta.

At present, however, in order to realise such an idea on the practical level, that is to put it into practice on an industrial scale, a problem crises in the machinability of the bread doughs which, as known to those skilled in the art and as indicated above, do not lend themselves to being worked by machines because of their toughness and viscoelasticity, particularly when account is taken of the rates imposed by industrial production.

Consequently, the problem which the present invention sets itself to resolve is that of preparing a bread dough which can be worked by machines, that is machinable, particularly by pasta-shaping machines, to give bread snacks having shapes and dimensions substantially the same as those of the corresponding shapes of pasta, such as, for example, butterflies, ears, shells, sardinian gnocchetti and the like.

This problem is solved according to the present invention by a method for producing bread snacks on an industrial scale as substantially claimed in claim 1 and subsequent dependent claims.

It is known that the polymeric chains of gluten constitute the support structure of flour-water doughs, particularly of bread doughs and food products obtained therefrom. It is thought, moreover, that the polymeric chains are to a great extent responsible for the characteristics of toughness and viscoelasticity of doughs, particularly of bread doughs.

A substantial reduction in these characteristics is achieved by suitable hydrolysis of the gluten, that is to say, by appropriate fragmentation of its polymeric chains.

US-A-1 803 588 discloses a new composition comprising an oxidising salt having a dough-maturing action, an ingredient having an acid reaction, an ammonium salt to supply nitrogen to the yeast and to release acid components, an enzymatic substance to aid the conditioning of the dough and a neutralising agent in making "short" leavened products.

It also discloses a process of making a "short" yeast-leavened dough product based on said composition.

EP-A-0 435 606 discloses a dough for bread making comprising wheat flour, water, yeast, an enzyme and at least one substance increasing water absorption, selected from saccharides, oils or fats and diary products.

It also discloses a method of bread making comprising fermenting the above-mentioned dough and then baking the same.

GB-A-1 235 557 discloses a process for the preparation of crisps from cereal flour comprising the steps of mixing cereal flour with water, preparing flakes or other pieces from the dough of the mixing, hydrating the flakes immersing them in water and frying the hydrated flakes or other pieces, wherein the flakes are stamped from sheets into which the dough has been rolled.

None of the above-mentioned prior art documents solves the problem of providing new kinds of snacks made from bread dough which are endowed with new shapes.

Now when a bread dough no longer has any residual elasticity, or this is very reduced, it is surprisingly workable by machines, particularly and to advantage by machines for shaping pastas.

Also the shapes so obtained no longer tend to reassume their original lack of shape.

A first hydrolysing agent for the gluten, which is preferred for the purposes of the present invention, is a proteolytic enzyme, particularly protease.

The best results have been achieved when the protease has been added to the dough in quantities of between 0.01% and 0.04% by weight with respect to the total weight of the dough itself.

The total moisture content of the dough is also an important factor in its machinability.

It is necessary, for this purpose, for the moisture content to be no greater than about 33% by weight of the total weight of the bread dough.

The best results are achieved when the moisture content is between 28% and 32% by weight.

For this purpose it is important to note that conventional bread doughs have a moisture content of 40% to 45% by weight or more.

The protease-containing moist dough must rest under controlled conditions of temperature and humidity.

During this rest period the dough ferments because of the yeast incorporated therein. It is during this rest period that it is important to control the temperature to between 25°C and 35°C since, within this range, the proteolytic enzyme (protease) displays a more balanced action.

At lower temperatures the action of the protease is in fact too mild while at temperatures higher than 35°C the action on the gluten chains is too energetic and reduces its supporting function too drastically so that the final product is damaged.

An agent which may be used instead of the proteolytic enzyme is sodium metabisulphite. When used in the same quantities as the protease, this enables a dough to be obtained with the same characteristics of machinability even though its structure (physical characteristics linked to porosity, pore dimensions and their distribution) differs.

Accordingly, the method of the present invention includes the following operative steps:
- preparing a bread dough comprising gluten-containing flour, water and yeast having a total moisture content of no more than 33% by weight of the total weight of the dough,
- partially hydrolysing the gluten in the dough by means of a gluten-hydrolysing agent incorporated in the dough itself,
- resting-fermenting the dough in conditions of controlled temperature and humidity,
- shaping the raised dough by means of machines for shaping pastas to obtain the corresponding bread snacks,
- baking and drying the snacks.

To advantage and in accordance with one characteristic of this invention, the partial hydrolysis of the gluten is carried out at the same time as the fermentation of the dough during the corresponding rest period.

Moreover the fermentation of the dough and the hydrolysis of the glutine contained therein are carried out in an environment with the temperature controlled to within the range 25%-35°C and with a relative humidity of between 80% and 85% over a period of about 4 hours.

A great advantage achieved by the method of the invention, particularly from the point of view of a high production rate on an industrial scale, is constituted by the possibility of using pasta-shaping machines for forming bread snacks in desired shapes. For this purpose, the method of the invention is further characterised in that the fermented dough is subjected to successive rolling treatments to obtain a sheet having a thickness of about 2mm which is then supplied continuously to the pasta-shaping machine. The product leaving this machine is baked at a temperature of between 180°C and 220°C for a period of 6 to 8 minutes.

Advantages and further characteristics of the invention will become clearer from the following examples of the method of production of bread snacks, according to the invention itself, given purely way of non-limiting example and in which all the percentages are expressed as percentages by weight if not otherwise indicated.

### EXAMPLE 1

The following ingredients were mixed in a conventional manner in a vertical bread kneading machine:
- superfine flour: 70%
- vegetable oil (palm oil): 5.6%
- natural yeast: 2.80%
- salt: 1.9%
- lard: 1.4%
- water: 18.2%
- protease: 0.02%

The mixing was carried out for 3 minutes at slow speed (about 70-80 revolutions per minute) and for a further 6 minutes at high speed (about 145-155 revolutions per minute). After discharge from the vertical kneader, the dough was left to rise in a chamber kept thermostatically at 27°C with a relative humidity of 80% for a period of 4.5 hours. During this period the dough simultaneously fermented and the gluten contained therein was partially hydrolysed.

At the end of the rest-fermentation period, the dough had a moisture content of 31% by weight of the total weight, was in the form of a loose mass of a hard consistency, completely different from that of a conventional bread dough.

This fermented dough was then sent to a rolling machine of conventional type which output a sheet having a thickness of about 25mm.

This sheet was subsequently subjected to sizing to achieve a thickness of 10-15mm and then, by successive, repeated rolling stages alternated with sizing stages, the thickness of the sheet was finally reduced to about 2mm which was suitable for the envisaged working by pasta-shaping machines.

This sheet was fed to a stamping/pinching machine of conventional type used for the shaping of pasta into so-called "butterflies". At the output from this machine, the bread butterflies were subjected to slight ventilation to facilitate their movement and prevent them from sticking to each other.

After shaping, the bread butterflies were deposited on a mesh conveyor of a baking oven. The mesh conveyor was, to advantage, kept at a temperature of about 90°C-100°C to enable the bread products to leaven and to rise and bake uniformly in the subsequent baking oven. The baking was carried out at a temperature of 200°C to 260°C for 6 to 7 minutes.

The baked bread butterflies leaving the oven were then passed through a drying/desiccating tunnel for a period of 10 to 15 minutes undergoing a thermal treatment at a temperature of 130°C to 150°C. This treatment was carried out to reduce the moisture content of the product to no more than 4%-5% in order to ensure that the product had a long shelf life.

This drying/desiccating heat treatment was necessary since the baking was carried out at higher temperatures than usual to give the product a uniform colour and a friable structure.

### EXAMPLE 2

The process of Example 1 was repeated with the exception that some chemical raising agents (for example sodium bicarbonate, cream of tartar), associated with the proteolytic enzymes, particularly protease, were used together with the natural yeast, still in the same quantities.

More particularly, to obtain the desired bread dough, a vertical spiral kneading machine was used and the following ingredients were mixed:
- superfine-type flour: 65%
- palm oil: 7%
- lard: 0.5%
- salt: 1.7%
- malt extract: 2%
- natural yeast: 2%
- sodium bicarbonate and cream of tartar: 1%
- protease: 0.02%
- water: 18%

The dough was left to ferment for 4 hours in a leavening chamber kept thermostatically at 27°C, with a relative humidity of 85%. During this fermentation the gluten in the dough was also hydrolysed. The fermented dough, which had a moisture content of 32%, was rolled to obtain a sheet having a thickness of 2mm which was then supplied to the stamping/pinching machine to obtain the bread butterflies. These butterflies were deposited on a hot mesh at 80°C in an oven in which baking was effected at a temperature of 220°C for an optimum time of about 8 minutes.

After drying, for 15 minutes at about 150°C, the baked bread butterflies were cooled and packaged.

### EXAMPLE 3

The process of Example 2 was repeated with the exception that the raising agent used was exclusively chemical, in particular sodium bicarbonate and ammonium bicarbonate. The quantities of chemical yeast used were of the order of 2-2.3% by weight of the weight of the dough.

A proteolytic enzyme (protease) was again incorporated in the dough in quantities of about 0.03% to 0.035% by weight of the dough.

The dough discharged from the vertical kneading machine was left to rest for 4 to 5 hours in a chamber kept thermostatically at 30°C, with a relative humidity of 85%, to obtain the simultaneous fermentation of the dough and hydrolysis of the gluten contained therein.

The dough, which at the end of the rest period had a moisture content of 32% by weight of the total weight of the dough, was then subjected to successive rolling operations alternated with sizing operations, to give a sheet having a thickness of about 2mm.

This sheet was supplied to a stamping/pinching machine of the type used conventionally to shape pasta butterflies. The bread butterflies thus obtained were baked and subsequently dried by the method explained in Example 1.

The butterflies obtained had a structure very similar to that of a biscuit.

### EXAMPLE 4

On the basis of the result of Example 3 and, more particularly, of the biscuit structure presented by the product (butterflies) obtained, a horizontal kneading machine was loaded with the following ingredients:
- palm oil: 9%
- sugar: 3%
- glucose syrup: 4%
- malt extract: 1.3%
- salt: 0.7%

After these ingredients had been mixed for about 3 minutes, the following further ingredients were added to the vertical kneading machine:
- superfine-type flour: 66%
- sodium bicarbonate and ammonium bicarbonate: 1.8%
- protease: 0.03%
- water: 17%

The dough was rested for 4 hours in a chamber kept thermostatically at 28°C and with a relative humidity of 80%.

During this rest period, the dough fermented and the gluten contained therein was hydrolysed simultaneously.

The dough, which had a total moisture content of 31% by weight, was rolled to obtain a sheet having a thickness of 2mm which was supplied to a butterfly shaping machine. The butterflies thus formed were then baked at 180°C for about 8 minutes and were subsequently dried/desiccated at 120°C for about 10 minutes.

The butterflies obtained were exactly like fairly sweet biscuits.

### EXAMPLE 5

The process of Example 1 was repeated with just one difference consisting in the use of 0.04% sodium metabisulphite by weight of the total weight of the dough, instead of the protease, while leaving the composition of the dough and the experimental and working conditions unchanged.

## Claims

1. A method for the production of bread snacks on an industrial scale, including the following operative steps:
- preparing a bread dough comprising gluten containing flour, water and yeast, having a total moisture content of no more than 33% by weight of the total weight of the dough,
- partially hydrolysing the gluten in the dough by means of a gluten hydrolysing agent incorporated in the dough itself,
- resting-fermenting the dough in conditions of controlled temperature and humidity, characterised in that it comprises the steps of:
- shaping the raised dough by means of machines for shaping pastas to obtain the corresponding bread snacks,
- baking and drying the snacks.

2. A method according to claim 1, characterised in that the hydrolysing agent is a protease.

3. A method according to anyone of Claims 1 and 2 characterised in that the step of partially hydrolysing the gluten is carried out simultaneously with the fermentation of the dough during the corresponding rest period.

4. A method according to Claim 3, characterised in that the steps of fermenting the dough and partially hydrolysing the gluten therein are carried out in a controlled environment with a temperature of between 25°C and 35°C and with a relative humidity of between 80% and 85% over a period of about 4 hours.

5. A method according to Claim 3, characterised in that the fermented dough is subjected to a series of successive rolling steps to obtain a sheet of predetermined thickness, the sheet then being supplied continuously to a machine for shaping pasta.

6. A method according to Claim 5, characterised in that the product leaving the pasta-shaping machine is baked at a temperature of between 180°C and 220°C over a period of 6 to 8 minutes to obtain the corresponding baked bread snacks.

7. A method according to Claim 6, characterised in that the baked bread snacks are subsequently dried/desiccated by heat treatment at 130°C-150°C for 10-15 minutes.

8. A method according to Claim 1, characterised in that the pasta-shaping machine is a stamping/pinching machine for forming snacks in the shapes of butterflies.

## Patentansprüche

1. Verfahren für die Mengenherstellung von Brotsnacks umfassend die folgenden Arbeitsschritte:
- Vorbereiten eines Brotteigs, der Gluten mit Mehl sowie Wasser und Hefe umfaßt, mit einem Gesamtfeuchtigkeitsgehalt von nicht mehr als 33 Gewichts-% bezogen auf das Gesamtgewicht des Teigs,
- teilweises Hydrolisieren des Glutens im Teig mittels eines Gluten-Hydrolisiermittels, das im Teig selbst enthalten ist,
- Gärenlassen des Teigs unter Bedingungen, wo Temperatur und Feuchtigkeit kontrolliert werden, **dadurch gekennzeichnet, daß** es die Schritte umfaßt:
- Formen des aufgegangenen Teigs mit Maschinen zum Formen von Teigwaren, um die entsprechenden Brotsnacks zu erhalten,
- Backen und Trocknen der Snacks.

2. Verfahren nach Anspruch 1, dadurch gekennzeichnet, daß das Hydrolisiermittel Protease ist.

3. Verfahren nach einem der Ansprüche 1 oder 2, dadurch gekennzeichnet, daß der Schritt des teilweisen Hydrolisierens des Glutens gleichzeitig mit der Gärung des Teigs während der entsprechenden Ruheperiode ausgeführt wird.

4. Verfahren nach Anspruch 3, dadurch gekennzeichnet, daß die Schritte der Gärung des Teigs und des teilweisen Hydrolisierens des Glutens in einer kontrollierten Umgebung mit einer Temperatur zwischen 25°C und 35°C und mit einer relativen Feuchtigkeit zwischen 80% und 85% über eine Zeitdauer von ungefähr 4 Stunden ausgeführt werden.

5. Verfahren nach Anspruch 3, dadurch gekennzeichnet, daß der gegorene Teig einer Reihe von aufeinanderfolgenden Ausrollschritten unterzogen wird, um eine Schicht von vorbestimmter Dicke zu erhalten, wobei die Schicht dann kontinuierlich einer Maschine zum Formen von Teigwaren zugeführt wird.

6. Verfahren nach Anspruch 5, dadurch gekennzeichnet, daß das Produkt, das die Teigwaren-Formmaschine verläßt, bei einer Temperatur zwischen 180°C und 220°C über eine Zeitdauer von 6 - 8 Minuten gebacken wird, um die entsprechenden gebackenen Brotsnacks zu erhalten.

7. Verfahren nach Anspruch 6, dadurch gekennzeichnet, daß die gebackenen Brotsnacks anschließend durch eine Wärmebehandlung bei 130°C bis 150°C für 10 - 15 Minuten getrocknet/ausgetrocknet werden.

8. Verfahren nach Anspruch 1, dadurch gekennzeichnet, daß die Teigwaren-Formmaschine eine Stanz-/Preß-Maschine zum Formen von Snacks in der Form von Schmetterlingen ist.

## Revendications

1. Procédé pour la production de produits alimentaires à base de pain à une échelle industrielle, comprenant les étapes suivantes consistant à:
- préparer une pâte à pain comprenant de la farine contenant du gluten, de l'eau et de la levure, ayant un contenu total d'humidité inférieur à 33% en masse de la masse totale de la pâte,
- hydrolyser partiellement le gluten dans la pâte au moyen d'un agent d'hydrolyse de gluten incorporé dans la pâte elle-même,
- laisser reposer et faire fermenter la pâte dans des conditions de température et d'humidité contrôlées, caractérisé en ce qu'il comprend les étapes consistant à :
- mettre en forme la pâte levée au moyen de machines pour mettre en forme des pâtes pour obtenir les produits alimentaires à base de pain correspondants,
- cuire et sécher les produits alimentaires.

2. Procédé selon la revendication 1, caractérisé en ce que l'agent d'hydrolyse est une protéase.

3. Procédé selon l'une quelconque des revendications 1 et 2, caractérisé en ce que l'étape consistant à hydrolyser partiellement le gluten est mise en oeuvre simultanément à la fermentation de la pâte pendant la période de repos correspondante.

4. Procédé selon la revendication 3, caractérisé en ce que les étapes consistant à faire fermenter la pâte et à partiellement hydrolyser le gluten dans celle-ci sont mises en oeuvre dans un environnement contrôlé avec une température comprise entre 25° C et 35° C et avec une humidité relative comprise entre 80 % et 85 % sur une période d'environ 4 heures.

5. Procédé selon la revendication 3, caractérisé en ce que la pâte fermentée est soumise à une série d'étapes d'étalement successives pour obtenir une feuille d'épaisseur prédéterminée, la feuille étant fournie continûment à une machine pour mettre en forme des pâtes.

6. Procédé selon la revendication 5, caractérisé en ce que le produit quittant la machine de mise en forme de pâtes est cuit à une température comprise entre 180° C et 220° C sur une période de 6 à 8 minutes pour obtenir les produits alimentaires à base de pain cuits.

7. Procédé selon la revendication 6, caractérisé en ce que les produits alimentaires à base de pain cuits sont ensuite séchés/déshydratés par un traitement thermique à une température comprise entre 130° C et 150° C pendant 10 à 15 minutes.

8. Procédé selon la revendication 1, caractérisé en ce que la machine de mise en forme de pâtes est une machine d'estampage/poinçonnage pour former des produits alimentaires en forme de papillons.
